Europäisches Patentamt

European Patent Office

Office européen des brevets

(11) Numéro de publication: **0 344 822**
**A2**

# (12) DEMANDE DE BREVET EUROPEEN

(21) Numéro de dépôt: 89114149.1

(22) Date de dépôt: 18.03.88

(51) Int. Cl.⁴ **F16C 11/06 , F16C 11/10 , F16F 9/54**

(30) Priorité: 01.04.87 FR 8704547

(43) Date de publication de la demande:
06.12.89 Bulletin 89/49

(60) Numéro de publication de la demande initiale
en application de l'article 76 CBE : 0 287 411

(84) Etats contractants désignés:
DE ES FR GB IT

(71) Demandeur: AIRAX
Z.I. Besançon-Chemaudin
F-25320 Montferrand-Le-Chateau(FR)

(72) Inventeur: Dony, Dominique
Braillans
F-25640 Roulans(FR)
Inventeur: Humblot, Jacky
21 rue des Vignerons
F-25000 Besancon(FR)

(74) Mandataire: de Boisse, Louis Arnaud et al
CABINET de BOISSE 37, Avenue Franklin D.
Roosevelt
F-75008 Paris(FR)

(54) Articulation démontable à rotule.

(57) Articulation démontable à rotule, comprenant d'une part une rotule sphérique solidaire d'un tourillon et, d'autre part une cage (3) présentant une cavité (4) adaptée à recevoir la rotule avec un certain jeu, reliée à l'extérieur par un canal (5) pour permettre l'introduction de la rotule, ladite cage étant pourvue par ailleurs de moyens de fixation à un support. La cavité (4) et/ou le canal (5) présentent, par rapport à leur surface théorique ou cylindrique, des irrégularités (37) constituant des rainures et/ou des nervures, qui permettent l'adaptation à des variations du diamètre de la rotule par déformation locale de ces irrégularités, et/ou qui permettent également la constitution de réserves de lubrifiant.

FIG.11

## Articulation démontable à rotule.

La présente invention est relative à une articulation démontable à rotule, utilisable en particulier pour relier un ressort à gaz à un organe-support.

Sur les véhicules automobiles, les ressorts à gaz utilisés pour équilibrer les volets mobiles tels que capot, coffre ou hayon sont reliés à la carrosserie, le plus souvent, par l'intermédiaire d'articulations à rotule. Cette articulation est en général constituée de deux parties : une rotule en acier solidaire de la carrosserie et du volet et d'une cage en matière plastique ou en métal solidaire du ressort à gaz.

Les ressorts à gaz sont souvent montés dans les gouttières situées de part et d'autre du hayon, ils sont soumis aux intempéries, donc à la corrosion, particulièrement à la base de la cage qui est montée sur le fond du tube, car il peut y avoir rétention d'eau dans cette zone.

D'autre part, les exigences de productivité font que l'on désire utiliser des articulations qui puissent être montées très rapidement, de préférence en une seule opération, celle-ci comprenant à la fois la mise en place de la cage sur la rotule et la mise en position active des moyens de verrouillage. Cela exclut des articulations de type ancien, avec lesquelles on doit opérer en deux temps : d'abord mettre la bague sur la rotule par un déplacement parallèle à l'axe du tourillon qui porte la rotule, puis déplacer les moyens de verrouillage dans une direction différente, par exemple en les faisant coulisser perpendiculairement au tourillon.

Le brevet GB-A-323.976 avait décrit une articulation à rotule d'un type différent. Cette articulation à rotule comprend, comme les autres, d'une part, une rotule sphérique, solidaire d'un tourillon, et, d'autre part, une cage présentant une cavité apte à recevoir sensiblement sans jeu la rotule, et reliée à l'extérieur par un canal cylindrique de même diamètre, ladite cage étant pourvue par ailleurs de moyens de fixation à un support. La particularité de l'articulation de ce brevet est qu'elle est pourvue d'une bague élastique, dans son ensemble en forme de C, dont le corps entoure ladite cage en passant au-delà du fond de la cavité, et dont les extrémités pénètrent dans deux fentes de la cage, disposées de part et d'autre du canal, de largeur constante et débouchant dans le canal pour permettre aux extrémités de la bague de faire saillie à l'intérieur du canal et de retenir la rotule dans la cavité, ces fentes étant obliques par rapport à l'axe du canal et s'écartant du centre de la cavité en convergeant vers ledit axe. Il résulte de cette disposition qu'une force tendant à faire sortir la rotule de son logement produit un effet de coincement des extrémités de la bague dans leurs fentes, ce qui s'oppose efficacement à la sortie de la rotule.

Pour le montage, le document GB-A-323.976 prévoit l'utilisation d'un petit outil, en forme de languette, livré avec la cage et placé entre l'extérieur de celle-ci et la bague, près du débouché extérieur d'une fente. En faisant pivoter cet outil, on écarte l'extrémité de la bague de l'axe du canal. Le montage comprend donc trois opérations : écarter les extrémités de la bague, introduire la rotule dans la cage, relâcher la bague. On pourrait, toutefois, concevoir que, par un choix judicieux de la forme et de l'angle des extrémités de la bague, celles-ci puissent être écartées par la rotule elle-même, si bien que le montage se ferait en une seule opération. L'outil en forme de languette resterait cependant nécessaire pour le démontage, et on courrait le risque de voir ce démontage impossible si, par suite d'une accessibilité latérale insuffisante, on pouvait procéder à la mise en place par simple déplacement relatif de la cage et de la rotule sans pouvoir ensuite actionner l'outil. Le dispositif de ce document présente, en outre, un risque de corrosion à l'endroit où la bague est constamment en contact avec la rotule, car l'usure enlève la protection à l'endroit du contact.

Les modifications à apporter à la cage du document GB-A-323.976 pour permettre le montage en une seule opération se révèlent poser de multiples problèmes. Si l'angle que font les extrémités de la bague avec l'axe du canal se rapproche de l'angle droit, selon l'écartement de ces extrémités entre elles, on peut avoir ou bien un montage facile mais une absence de verrouillage efficace, ou bien un montage impossible ou risquant de fausser la bague, mais un verrouillage très efficace. Si la forme de la bague se rapproche de celle d'un arc de cercle, elle risque de tourner sur elle-même lors du transport ou des manipulations précédant le montage, et d'obstruer le canal, ce qui rend ce montage impossible.

Le même évènement fâcheux peut se produire au moment du montage, si, par suite d'une irrégularité, la rotule pousse une des extrémités de la bague sans être en contact avec l'autre, cela provoque alors la rotation de la bague sur elle-même. On notera, en outre, que, très souvent, les rotules présentent un méplat à leur sommet, afin de permettre une fixation du tourillon sur un support par rivetage. Il en résulte que les tolérances sur la position des extrémités de la bague sont étroites. Il paraît donc nécessaire d'immobiliser fermement la bague par rapport à la cage, pour empêcher sa rotation.

Un autre inconvénient des formes de bagues trop proches de celles d'un arc de cercle est qu'elles obligent à prévoir des fentes larges, surtout du côté de leur débouché vers l'extérieur, pour permettre une mise en place facile de la bague. Des fentes trop larges diminuent la résistance mécanique de la cage. D'un autre côté, des fentes très étroites, si elles peuvent faciliter la solution du problème de la rotation de la bague, présentent des difficultés d'obtention.

La présente invention a pour but d'éviter ces divers inconvénients, et de fournir une articulation à rotule dont le montage en une seule opération, entraîne le minimum de risque d'incidents, et qui soit cependant simple et facile à obtenir.

L'invention fournit en conséquence une articulation démontable à rotule, comprenant d'une part une rotule sphérique, solidaire d'un tourillon et, d'autre part, une cage présentant une cavité adaptée à recevoir la rotule, reliée à l'extérieur par un canal pour permettre l'introduction de la rotule, ladite cage étant pourvue par ailleurs de moyens de fixation à un support, et d'une bague élastique, dans son ensemble en forme de C, dont le corps entoure ladite cage, et dont les extrémités pénètrent dans deux fentes de la cage, ces fentes étant disposées de part et d'autre dudit canal et débouchant dans celui-ci pour permettre aux extrémités de la bague de faire saillie à l'intérieur du canal et de retenir la rotule dans la cavité, ces fentes étant obliques par rapport à l'axe du canal, et s'écartant du centre de la cavité en se rapprochant dudit axe, cette articulation ayant pour particularité que, lorsque la rotule est absente, la bague, d'une part, exerce sur la cage une force de pression à peu près parallèle à l'axe du canal en deux points situés de part et d'autre de celui-ci et écartés de cet axe, et, d'autre part, exerce d'autres forces de pression sur la face interne de la fente par l'intermédiaire de deux bossages, à convexité tournée vers l'intérieur de la bague, et formés sur celle-ci, ou d'une saillie prévue sur ladite face interne de la fente, et, lorsque la rotule est dans la cavité, le tourillon étant coaxial au canal, la bague n'est en contact ni avec la rotule, ni avec le tourillon et occupe la même position que lorsque la rotule est absente

Par "face interne" d'une fente, on entend celle qui est la plus proche du centre de la cavité.

Grâce à la disposition géométrique indiquée, un couple important s'oppose à la rotation de la bague sur elle-même, tant avant le montage que pendant celui-ci.

En outre, le démontage peut être effectué en introduisant un outil entre la bague et la cage, dans la zone de leur sommet, où ne se trouvent pas les points d'appui qu'on vient de citer.

Les deux modalités proposées en alternative pour les fentes et les extrémités de la bague permettent d'atteindre les mêmes résultats : une fente ni trop large ni trop étroite, donc n'affaiblissant pas exagérément la cage mais facile à obtenir, et un appui à peu près central de la partie d'extrémité de la bague sur la face interne de la fente, afin d'éviter une torsion éventuelle de la bague sous l'effet d'un grain de poussière par exemple.

Par ailleurs, tout risque de corrosion par contact de la bague avec la rotule ou son tourillon est évité, en même temps que le bruit causé par les déplacements de la bague par rapport à la cage. L'usure de celle-ci au contact de la bague est également réduite.

Les deux modalités indiquées plus haut, à savoir les bossages prévus sur la bague et la nervure sur la face interne de la fente ont toutes deux pour effet de procurer un positionnement rigoureux des extrémités de la bague avec une largeur de fente compatible avec une obtention aisée de la cage par moulage. L'emploi des bossages exige un formage complémentaire de la bague alors que la nervure de la fente rend un peu plus difficile le moulage de la cage. Le choix est une affaire d'opportunité, le formage de l'acier et le moulage de matière plastique étant souvent réalisés en des lieux différents.

De préférence, la cage présente une rainure périphérique dans laquelle est logée la partie de la bague qui est à l'extérieur des fentes, lesdits points d'appui de la bague sur la cage se trouvant au fond de cette rainure, et les fentes débouchant au fond de cette rainure, et, avantageusement, le fond de la rainure, dans la région de la face externe de la cage qui porte lesdits points d'appui, est à peu près plat, et perpendiculaire à l'axe du canal, à l'exception éventuelle de bossages constituant lesdits points d'appui.

Suivant des modalités avantageuses :
- la face externe de la cage présente au moins un bossage adjacent à la rainure, présentant du côté de la rainure une face oblique pour servir de point d'appui à un outil pour soulever la bague,
- la bague présente, dans sa région centrale, une partie à concavité tournée vers l'intérieur, de courbure plus forte que l'ensemble de la bague, et de préférence, la région centrale de la bague, de part et d'autre de la partie à forte courbure, est sensiblement plane,
- les parties d'extrémités de la bague sont sensiblement rectilignes, et se terminent par un angle rentrant, et les zones situées de chaque côté de cet angle sont pliées vers l'intérieur.

D'autres particularités avantageuses, qu'on va maintenant décrire, sont, de préférence, associées aux modalités de l'invention pour procurer une articulation ayant les meilleures performances. On doit cependant observer que ces particularités peuvent être, éventuellement, associées à d'autres types d'articulation à rotule.

Dans le cas où une articulation à rotule comporte une cage présentant une cavité qui reçoit la rotule avec un certain jeu, et où cette cage exerce en permanence sur la rotule une force perpendiculaire à la direction du canal d'entrée de la rotule, ce qui est le cas lorsque l'articulation est reliée à un ressort à gaz, il est avantageux de prévoir que :
- un évidement est formé dans la cage à proximité de la zone où cette force applique la paroi de la cavité contre la rotule et
- le fond de cet évidement débouche dans la cavité,ou est à une distance de cette cavité qui est calculée pour que, sous l'effet de cette force, la paroi de la cavité se déforme au contact de la rotule, si bien que, dans cette zone, le rayon de la paroi devient égal, sans jeu, à celui de la rotule, ce qui évite tout jeu dans une direction différente de celle de la force, et maintient la rotule dans une position fixe. Avantageusement, la matière de la cage est plus déformable que celle de la rotule, et l'évidement ne débouche pas dans la cavité. Avantageusement aussi, l'évidement est constitué par le fond d'un trou de fixation de la cage sur un support.

Cette modalité est intéressante dans l'industrie automobile, pour laquelle la cage à rotule qu'on décrit est particulièrement destinée, car il est souvent nécessaire de prévoir un certain jeu dans la cavité, pour parer aux irrégularités provenant par exemple du fait que la rotule supporte une couche de peinture dont l'épaisseur ne peut être garantie avec une très grande précision.

Une autre modalité, qui répond à la même préoccupation, consiste à prévoir que, la cage étant de préférence en une matière plus déformable que la rotule, la cavité et/ou le canal présentent, par rapport à leur surface théorique sphérique ou cylindrique, des irrégularités constituant des rainures et/ou des nervures, qui permettent l'adaptation à des variations du diamètre de la rotule par déformation locale de ces irrégularités, et/ou qui permettent également la constitution de réserves de lubrifiant.

De préférence, ces irrégularités correspondent au fait que le canal et/ou la cavité ont une section polygonale convexe.

Si l'articulation à rotule est soumise à une force permanente perpendiculaire à la direction du canal, ou faisant un angle important avec cette direction, il est préférable de prévoir que les irrégularités sont absentes de la zone où cette force applique la paroi de la cavité contre la rotule.

Deux autres modalités intéressantes sont relatives à la solution de problèmes qu'on rencontre fréquemment dans l'industrie automobile.

Le premier de ces problèmes est relatif à la protection de la zone de liaison entre la cage à rotule et un ressort à gaz qui la porte. Il s'agit soit d'empêcher la corrosion dans cette zone, soit d'éviter que l'usager puisse venir en contact avec une tige de ressort à gaz, qui porte toujours une petite quantité de lubrifiant.

Dans ce cas, on prévoit avantageusement que la cage à rotule présente, à son extrémité de fixation, une gorge et un épaulement qui servent de logement et de butée pour une pièce déformable à froid ou à chaud, d'étanchéité ou de protection, cette pièce venant en appui contre le corps du ressort à gaz, ou supportant un manchon protégeant la tige du ressort à gaz.

Un autre problème rencontré fréquemment est celui de la transmission du courant vers un support électriquement conducteur, tel qu'un ressort à gaz. Les cosses métalliques usuelles, qui sont montées en bout de la cage à rotule, n'assurent un contact électrique convenable avec le support, que dans le cas où celui-ci est vissé à fond du logement et vient en appui contre la cage à rotule. Un desserrage produit un contact incertain.

Pour résoudre ce problème, on prévoit dans la cage à rotule un trou pour auto-taraudage, présentant des rainures longitudinales, et on loge, dans une de ces rainures au moins, et de préférence dans deux rainures disposées symétriquement par rapport à l'axe, une patte conductrice solidaire électriquement de la cosse. On visse ensuite le ressort à gaz, ou tout autre pièce convenable, par auto-taraudage, les filets de la pièce mâle mordant dans les parties en saillie entre les rainures·du trou, et mordant également partiellement dans la patte conductrice, ce qui a pour effet, au minimum, d'éliminer les restes de peinture, et d'assurer un bon contact électrique même lorsque le vissage n'est pas allé jusqu'au fond.

D'autres modalités et avantages de l'invention ressortiront de la description qui va suivre, relative à des exemples pratiques de réalisation, et illustrée à l'aide des dessins, parmi lesquels :

Figure 1 est une vue en élévation et coupe partielle d'une articulation selon l'invention, avant la mise en place de la rotule dans son logement.

Figure 2 est une coupe agrandie selon la ligne II-II de la figure 1, la rotule étant en place dans son logement.

Figure 3 est une vue de côté de la bague.

Figures 4 et 5 sont des vues d'une extrémité de la bague, selon les flèches IV et V de la figure 3.

Figure 6 est une demi-coupe analogue à la figure 2, montrant une variante.

Figure 7 est une vue en perspective d'une extrémité de la bague.

Figure 8 est une vue en coupe d'une variante de la cage à rotule, la rotule et la bague étant enlevées.

Figure 9 est une coupe selon la ligne IX-IX de la figure 8.

Figures 10 et 11 sont des vues de dessous et en coupe de la cage, montrant une modalité particulière

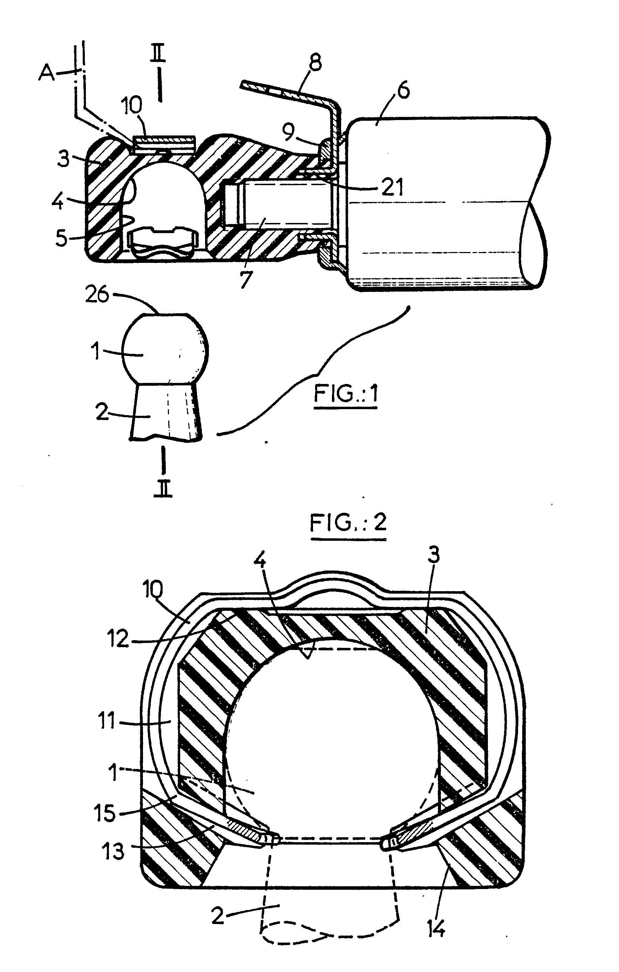

La figure 1 montre une articulation comprenant d'une part une rotule 1, portée par un tourillon 2, de type classique. Les formes et dimensions de ces rotules et tiges sont normalisées, notamment chez les constructeurs automobiles. L'articulation comprend, par ailleurs, une cage à rotule 3 qui présente une cavité 4, de forme hémisphérique, destinée à recevoir la rotule, et débouchant à l'extérieur par un canal 5, de même diamètre.

La cage à rotule 3 est pourvue, par ailleurs, de moyens de fixation à un support, qui peut être un ressort à gaz 6, représenté en partie seulement sur la figure. Dans le cas représenté, ces moyens consistent en un trou taraudé 7. dont l'axe est perpendiculaire à celui du canal 5 et qui croise celui-ci au centre géométrique du logement hémisphérique 4, bien que cela ne soit pas indispensable. A la place du trou taraudé 7, on peut prévoir un logement pour auto-taraudage comme on le verra plus loin, ou encore un autre moyen de fixation. La référence 8 désigne une cosse de contact électrique, montée sur l'extrémité de la cage et immobilisée grâce à des pattes qui pénètrent dans des trous prévus autour du trou de fixation 7, et associée à un capuchon 9, destiné à protéger contre la corrosion le contact entre le ressort à gaz 6 et la cage à rotule, ainsi que le fond du ressort à gaz lui-même.

La cage à rotule est en matière plastique moulée.

Une bague élastique 10, en forme de C, entoure partiellement la cage 3 rotule au voisinage du logement 4. Elle sera décrite avec plus de précision dans la suite.

Le corps de la cage à rotule présente, à sa surface extérieure, dans la région du logement 4, une rainure 11. Cette rainure s'étend sur un peu plus de 180° de la périphérie de la cage, partant du débouché d'une fente 13, passant au-dessus du fond du logement 4, et revenant, de l'autre côté de la cage, s'arrêter au débouché de l'autre fente 13. Dans la partie sommitale, c'est-à-dire la partie opposée à l'ouverture du canal 5, le fond de la rainure est sensiblement plan, c'est-à-dire perpendiculaire à l'axe du canal 5, avec toutefois deux bossages 12, visibles aux figures 2 et 6, qui font saillie sur le fond de la rainure. A chacune de ses extrémités, la rainure 11 communique avec une fente 13, à section constante sur toute sa longueur qui traverse la paroi de la cage à rotule, pour déboucher dans le canal 5, au-dessous de la jonction de celui-ci avec le logement 4, à proximité d'une partie évasée 13, par laquelle ce canal 5 débouche vers l'extérieur. Une nervure 15, qui s'étend sur toute la longueur de la fente, est prévue sur la paroi interne de la fente, c'est-à-dire la paroi qui est du côté du logement 4. La direction générale de la fente 13 fait un angle d'environ 60° avec l'axe du logement 5, les deux fentes convergeant vers l'axe du canal 5, en direction de l'extérieur de la cage, c'est-à-dire à l'opposé du logement 4. La face interne de la fente 13, c'est-à-dire celle qui est la plus loin du logement 4, est sensiblement plane, et se prolonge jusqu'à la surface extérieure de la cage à rotule, en constituant la fin de la rainure 11. Deux bossages 16 et 17 sont prévus sur la face sommitale de la cage à rotule, c'est-à-dire du côté opposé au canal 5, l'un du côté des moyens de fixation 7, l'autre du côté opposé. Ces bossages sont adjacents à la rainure 11, et ils présentent, vers cette rainure, une face descendante, 18-19, inclinée à 45°.

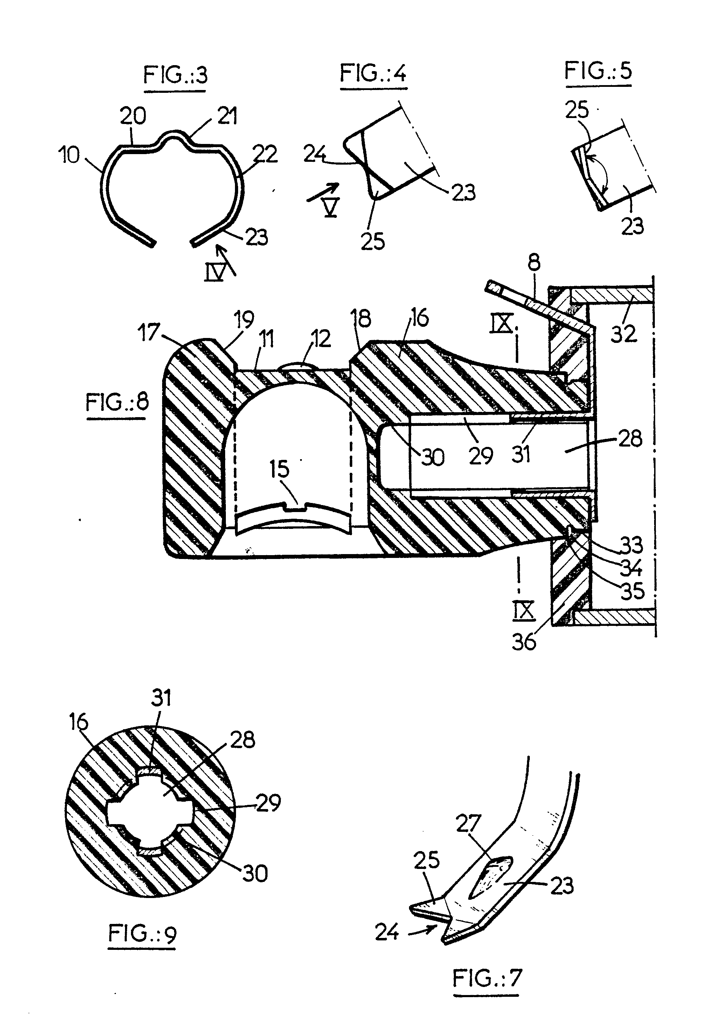

Si on se reporte maintenant à la figure 3, qui représente la bague élastique 10 au repos, on constate qu'elle a une forme générale en C, symétrique, avec un corps 20 à peu près plat, mais pourvu à sa partie centrale d'une saillie 21, à forte convexité vers l'extérieur du C. Le corps 20 est prolongé par deux ailes en arc de cercle 22, qui font un angle d'environ 45° avec le corps 20, et s'étendent sur environ 90°. Ces ailes 22 se prolongent par des parties d'extrémités 23, qui sont sensiblement rectilignes, et convergent l'une vers l'autre.

Les figures 4 et 5 montrent que, en plan, ces parties d'extrémités sont terminées par un angle rentrant 24, et les zones 25 qui sont de chaque côté de cet angle rentrant sont légèrement pliées vers l'intérieur.

La figure 7 montre la même disposition, mais les angles ont été exagérés pour une meilleure compréhension. Si on regarde, en effet, ces parties d'extrémités en bout, comme indiqué à la figure 5, on constate qu'elles ne sont que légèrement pliées de façon à former une sorte de gouttière, dont la concavité est tournée vers l'intérieur de la bague, et cette gouttière est assez peu accusée, son angle au sommet est de l'ordre de 160°.

Si on se reporte de nouveau à la figure 2, on constate que la bague 10, quand elle est en place sur la cage à rotule 3, est en appui sur les deux points d'appui 12 et sur les deux nervures 15, qui la maintiennent par conséquent en tension, l'écart entre les parties d'extrémité 23 étant donc plus important qu'il ne l'est au repos. Il est important que cet écart soit supérieur à la dimension d'un méplat 26 qui est prévu, de façon classique, au sommet de la rotule 1. Si ce n'était pas le cas, en effet, il serait impossible d'introduire la rotule dans son logement, la bague étant en place, en une seule opération. Il s'agit, bien entendu, de la distance entre les parties d'extrémités 23, mesurées dans le plan médian de la bague, qui est aussi un plan médian pour la rotule. En effet, la forme en angle rentrant 24 des extrémités des parties 23 est adaptée à la forme circulaire de la rotule. Comme on peut le voir sur la figure 2, l'écart entre les parties 23 est également supérieur au diamètre du collet par lequel le tourillon 2 se raccorde à la rotule 1, ce qui permet un débattement angulaire du tourillon par rapport à la cage à rotule 3 de quelques degrés, sans qu'il y ait contact entre la tige 2 et la bague 10. Bien entendu, l'écartement entre les parties terminales 23 de la bague est largement inférieur au diamètre de la rotule 1, elle-même, sinon celle-ci pourrait s'échapper.

La bague 10 est constituée, comme on l'aura deviné, à partir d'une lame d'acier.

A la figure 1, on a représenté en A la position d'un outil qu'on introduirait sous la partie fortement convexe 21 de la bague 10 en vue de soulever celle-ci pour dégager la rotule 1. On constate que l'opération est facilitée par les bossages 16 et 17 et leurs flancs inclinés 18-19. On peut observer que la partie fortement convexe 21 n'est pas absolument nécessaire pour introduire l'outil, il suffirait, par exemple, que les bords latéraux de la bague soient légèrement relevés vers le haut de la figure 1. Cette disposition, cependant, aurait le désavantage d'entraîner une augmentation de la raideur de la bague 10. La partie fortement convexe 21 a, au contraire, pour effet, d'augmenter de façon appréciable la flexibilité de cette bague, ce qui est un effet favorable.

Les figures 6 et 7 sont relatives à l'autre modalité de la présente invention, à savoir celle où, au lieu de la rainure 15, on a prévu un bossage sur la bague. La figure 6 représente un dispositif en tous points conforme à celui de la figure 2, à la seule différence que la nervure 15 a été supprimée, et que, en contrepartie, la zone centrale de la partie d'extrémité 23 de la bague 10 présente un bossage 27, à convexité tournée vers l'intérieur de la bague 10, et qui vient en contact avec la face interne de la fente 13.

Comme le montre mieux la figure 7, le bossage 27 est allongé le long de l'axe de la partie d'extrémité 23 de la bague. Cette disposition a pour effet d'augmenter la raideur de la bague dans cette région, où elle doit servir au verrouillage de la rotule. Comme on l'a dit plus haut, la figure 7 montre une vue volontairement déformée pour faciliter la compréhension.

Sur les figures 2 et 6, les fentes 13 sont représentées avec une forme rectiligne. Il est possible, tout en leur conservant une largeur sensiblement constante pour ne pas affaiblir la cage, de leur donner une forme incurvée qui peut faciliter l'introduction de la bague. Avantageusement, elles auront une forme d'arc de cercle dont le centre est dans le plan médian de la cage. Le démoulage de la cage s'effectuera alors par pivotement des deux moitiés du moule autour de ce centre.

La figure 8 montre une coupe d'une cage à rotule, dans laquelle la rotule elle-même et la bague sont supposées enlevées, mais qui est équipée par ailleurs d'une cosse électrique 8, fixée d'une manière différente de celle de la figure 1.

La cage à rotule, en effet, au lieu d'un trou taraudé 7, présente un trou pour auto-taraudage 28. Comme on le voit mieux à la figure 9, ce trou, à section de forme générale circulaire, présente dans sa paroi quatre larges rainures longitudinales 29, séparées par quatre nervures longitudinales 30. Selon la technique usuelle, lorsqu'on visse une pièce mâle filetée convenable dans un tel trou, les filets de cette pièce mâle viennent mordre dans les nervures 30, pour assurer la fixation. Dans le cas présent, la cosse électrique 8 comporte deux pattes 31, qui sont enfilées dans deux rainures 29 diamétralement opposées, sans faire saillie au-delà des nervures 30. Lorsque la pièce filetée mâle est insérée dans le trou 28, ses filets viennent mordre sur les pattes 31, mais moins fortement que dans les nervures 30. On assure ainsi un bon contact électrique dès le début de la mise en place de la pièce mâle, avec décapage éventuel des restants de peinture, matières grasses, ou autres impuretés non conductrices qui pourraient subsister sur la pièce mâle.

Dans le cas présent, cette pièce mâle constitue l'extrémité d'une tige de piston de ressort à gaz, non représentée. Le repère 32 se réfère à l'extrémité d'un tube de protection de cette tige de piston contre les contacts non désirés. Pour fixer de façon efficace ce tube 32 à la cage à rotule, celle-ci présente, à son extrémité, une partie cylindrique rétrécie 33, qui se termine sur une gorge 34, adacente à un épaulement 35 du corps de la cage à rotule. La gorge 34 et l'épaulement 35 servent respectivement de zones d'accrochage et de butées à un disque 36, en matière souple telle que du caoutchouc, qui est enfilé d'une part sur la cage à rotule et, d'autre part, dans le tube 32. On assure ainsi une fixation efficace, durable et étanche. Ce mode de fixation est le même que celui qui est employé pour le joint 9, visible à la figure 1, et qui sert à obtenir directement l'étanchéité, et la protection contre la corrosion, entre la cage à rotule et le corps 6 d'un ressort à gaz.

On observera que le fond du trou 28 avance jusqu'à proximité de la cavité 4 qui sert de logement à la rotule, si bien qu'il subsiste seulement un voile de faible épaisseur entre cette cavité et le fond du trou 28. Cette disposition intentionnelle a le résultat suivant : attendu que le ressort à gaz exerce en permanence sur la cage à rotule une action qui tend à pousser la paroi de la cavité contre la rotule, dans une direction perpendiculaire à l'axe du canal 5, la matière plastique dont est faite la cage à rotule se déforme pour épouser celle de la rotule. On obtient ainsi un contact permanent et fixe entre la rotule et sa cage, même si la cavité a été prévue avec un diamètre légèrement supérieur au diamètre nominal de la rotule, de façon à compenser les éventuelles irrégularités dues à la présence de peinture, notamment.

On conçoit qu'on pourrait supprimer le voile et obtenir un résultat analogue en déformant seulement les bords de la zone où le trou 28 déboucherait dans la cavité 4, il y a cependant lieu de noter que, dans cette situation, la protection de l'extrémité du ressort à gaz contre la corrosion serait moins bien assurée.

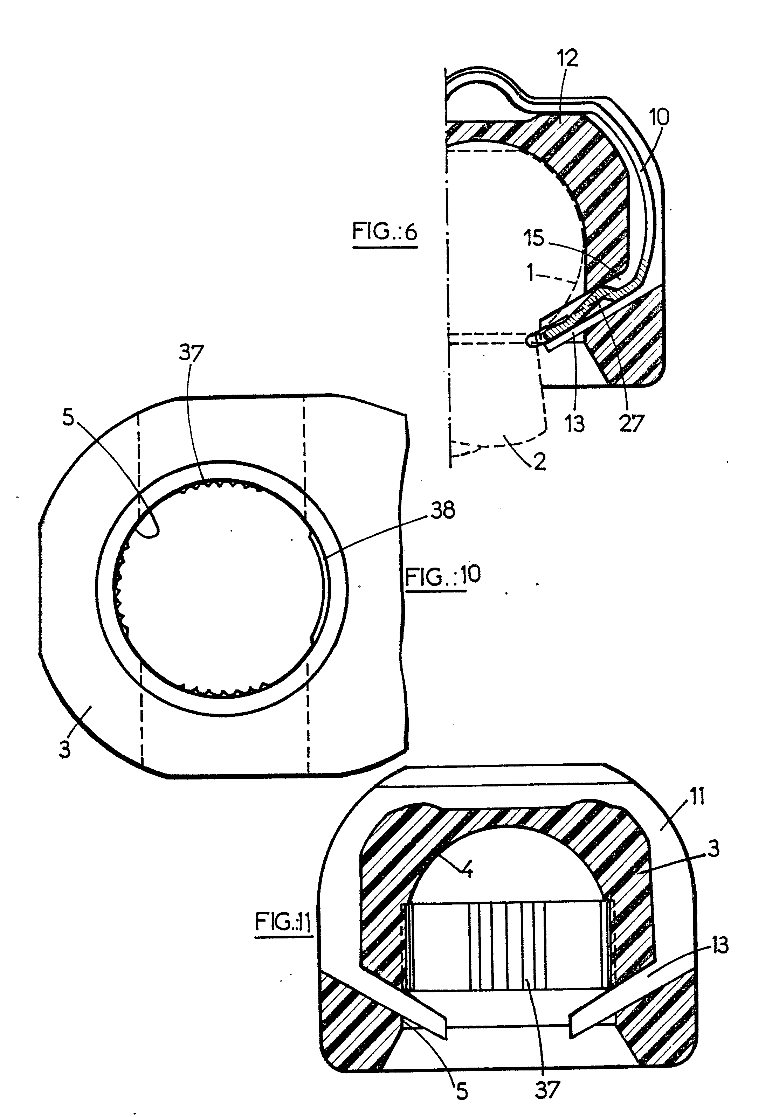

La figure 11 représente une cage à rotule qui est très semblable à celle de la figure 6, à part la présence, dans le canal 5, et la partie adjacente de la cavité 4, d'une série de nervures 37, parallèles à l'axe du canal 5. Ces nervures 37, dont la forme est mieux visible sur la figure 10, servent à obtenir un résultat analogue à celui qui est procuré par le voile situé au fond du trou 28, et dont a parlé plus haut, à savoir compenser les variations inévitables du diamètre de la rotule. Les nervures 37 ont une autre utilité, car les vides qui se trouvent entre ces nervures peuvent servir de réserves de matières lubrifiantes. On observera sur la figure 10, qu'une partie 38 de la périphérie du canal 5 ne comporte pas de nervures, mais présente au contraire une surface lisse. Il s'agit de la partie qui est normalement appuyée contre la rotule par l'effet de la force permanente du ressort à gaz. On observera que les deux effets produits par les rainures, compensation des irrégularités de diamètre et formation d'une réserve de lubrifiant, peuvent être obtenus avec d'autres types d'irrégularités de surface. On peut prévoir par exemple des rainures assez nombreuses et à bords lisses, toujours dirigées parallèlement à l'axe du canal 5. On peut également donner à la cavité 4 et/ou au canal 5 une forme polygonale. Selon le rapport des duretés de la matière dont est faite la cage et de la matière dont est faite la rotule, l'importance des irrégularités sera plus ou moins grande.

**Revendications**

1. Articulation démontable à rotule, comprenant d'une part une rotule sphérique (1), solidaire d'un tourillon (2) et, d'autre part, une cage (3) présentant une cavité (4) adaptée à recevoir la rotule avec un certain jeu, reliée à l'extérieur par un canal (5) pour permettre l'introduction de la rotule, ladite cage étant pourvue par ailleurs de moyens (7) de fixation à un support, caractérisée en ce que la cavité (4) et/ou le canal (5) présentent, par rapport à leur surface théorique ou cylindrique, des irrégularités (37) constituant des rainures et/ou des nervures, qui permettent l'adaptation à des variations du diamètre de la rotule (1) par déformation locale de ces irrégularités, et/ou qui permettent également la constitution de réserves de lubrifiant.

2. Articulation selon la revendication 1, caractérisée en ce que ces irrégularités (37) correspondent au fait que le canal et/ou la cavité ont une section polygonale.

3. Articulation selon l'une des revendications 1 ou 2, caractérisée en ce que les irrégularités (37) sont absentes de la zone (38) où ladite force perpendiculaire à la direction du canal (5) applique la paroi de la cavité contre la rotule.

·4. Articulation selon les revendications 1 à 3, caractérisée en ce que la matière de la cage est plus déformable que celle de la rotule.

FIG.:1

FIG.: 2

EP 0 344 822 A2

FIG.:3

FIG.:4

FIG.:5

FIG.:8

FIG.:9

FIG.:7

EP 0 344 822 A2

FIG.:6

FIG.:10

FIG.:11